# EUROPEAN PATENT APPLICATION

(11) **EP 1 271 987 A2**
(43) Date of publication of application: **02.01.2003**
(21) Application number: 02100549.1
(22) Date of filing: 23.05.2002
(51) Int. Cl.: H04Q 7/38

(54) **A name server for positioning objects**

(30) Priority: 25.06.2001 FI 20011356
(71) Applicant: Sonera Oyj, 00510 Helsinki (FI)
(72) Inventor: Eriksson, Mika, 00500, Helsinki (FI)
(74) Representative: Äkräs, Tapio

(57) **Abstract**

The invention is based on a name server which maps an object identifier to a terminal identifier. A terminal identifier may be e.g. an MSISDN number and an object identifier may be e.g. a domain name or a URL address. The said mapping enables that a terminal identifier, or in more detail, an object related to the terminal identifier, can be located through the name server by referring the object identifier the object. The referring may be performed via the Internet by using a browser. The referring may also be performed with a SMS or MMS. One of the objectives of the invention is that the owner of a terminal identifier can decide whether the positioning of his/her terminal identifier (e.g. a phone number) is possible or not, and who or what are able to locate the terminal identifier.

## Description

### Field of the invention

The present invention generally relates to positioning objects which can be, for example, persons.

### Background of the invention

Public land mobile networks (PLMN) include information about their subscribers' location. The network has to locate a subscriber when the subscriber makes a phone call or someone calls to the subscriber. Therefore the owner of the network obtains location data about its subscribers. If a subscriber allows, the owner of the network may utilize the subscriber's location data in a certain service, or the owner may transfer the location data to a certain service provider.

The geographical area of the network consists of partly overlapping cells so that each base station of the network has its own cell. A base station determines the area where a subscriber is located at the moment. If the location of a subscriber is queried when the mobile phone of the said subscriber is in connection with the base station, the location is estimated more accurate than in a case the mobile phone of the subscriber is not in connection with the base station. During the connection, the location estimate comprises a relatively small area inside the base station's cell. The location estimation can also be based on several previous location estimates and certain probability calculus.

Short message service (SMS) has been a very successful service in the second generation (2G) of mobile networks, particularly amongst the younger subscribers. The short messages are transmitted via mobile networks. GSM (global system for mobile communications) limits the length of short messages to 160 characters.

The limitations of SMS have been studied for the third generation of mobile services. The studies have come up with a new service called the multimedia messaging service (MMS) which will break through the barriers imposed by 2G SMS. SMS is focused on the use of signalling links having limited spare bandwidth.

MMS will by contrast use appropriate data channels and will be able to deliver much larger messages in a reasonable time. The fixed limit will be replaced by an ability to not only transfer much larger text contents, but also graphics, and even audio or video clips. MMS will take into account the usage of Internet-based protocols on a global basis.

Wireless application protocol (WAP) is similar to TCP/IP based protocols . WAP enables Internet communications and advanced telephony services on digital mobile phones, pagers, personal digital assistants, and other wireless terminals.

SMS and MMS standards are defined by the ETSI (European Telecommunications Standards Institute). WAP is defined by a WAP forum, which is an industry association comprising over 500 members. The WAP forum has a co-operative agreement with ETSI for making WAP the de-facto world-wide standard for the mobile Internet.

An Internet peripheral address (IP-address) is a number consisting of 32 bits. An IP-address is divided into four parts each of which includes a numerical value between 0 and 255. Usually, an IP-address is presented in a form which is easier to read and remember. This form consists of four integral number and three dots separating the integral numbers, for example, 193.199.35.1.

A domain is a network zone. The Internet consists of thousands of domains. Each domain has a domain name which is mapped to a certain IP-address. Several domain names can be mapped to one IP-address. For example, domain names www.jypoly.fi and jkolamk.jkol.jypoly.fi are mapped to IP-address 193.199.35.1. Domain names compose a hierarchical domain name system (DNS).

The root of a DNS tree is nameless. Top-level domains are under the root. The original three-letter domains are .com, .net, .org, .edu, .int, .mil and .gov. Domains .biz and .info will be taken in use in the near future. The first three are operated on commercial principles, while the last four have restrictive conditions on the registration of the domain names. In addition, there are two-letter top-level domains for each country, and domain .arpa which contains some Internet infrastructure databases. Under the top-level domains there are lower domains and, finally, host machines connected to the Internet.

Uniform resource locator (URL) is a system uniquely identifying each resource in the Internet, i.e. where each document or file is located.

A URL address consists of a domain name and a search path. For example, URL address "www.jypoly.fi/internet/jamk.nsf" consists of domain name "www.jypoly.fi" and search path "/internet/jamk.nsf".

A URL request consists of a protocol part and a URL address. For example, in the following URL request the protocol part is "http://" and the URL address is the before-mentioned "www.jypoly.fi/internet/jamk.nsf":
http://www.jypoly.fi/internet/jamk.nsf

URL is related to several protocols defining how data transfer is performed. Hypertext transfer protocol (HTTP), file transfer protocol (FTP), a protocol for email, i.e. Mailto, and WAP are some of these protocols.

When some person uses a browser and types in a URL request, the browser sends the URL request to a host machine which transmits it to a name server. If that name server knows the domain name, it returns an IP-address mapped to the domain name. If the name server is unfamiliar with the domain name, it asks the domain name from a name server farther up the DNS tree. If the second name server doesn't know the domain name either, it will ask yet another, until some name server knows, or an error message is generated.

Some positioning systems are based on location data provided by PLM networks. In more detail, the location data concern subscribers' location in certain time intervals. Each piece of location data includes a subscriber's MSISDN number, i.e. mobile subscriber integrated services digital network number. A gateway mobile location centre (GMLC) is a centre through which a mobile subscriber's location data is obtainable.

Some other positioning systems are based on global positioning system (GPS). GPS can provide much more accurate location data than PLM networks. GPS uses satellites owned by the US defence department. The GPS-based positioning systems require that each terminal to be located is equipped with a GPS receiver which receives signals from the satellites and calculates the position of the terminal.

Each piece of location data describes a subscriber's location at a certain moment. The location is disclosed by using some coordinate system, such as a uniform coordinate system (UCS).

By default, location data provided by PLM networks is confidential, because a subscriber's identity may be revealed through the subscriber's phone number. A phone number can be encrypted to prevent its disclosing. However, it is sometimes desirable that also other persons than the owner of a phone number can also obtain location data related to the said number. For example, when a phone number is associated with a bus, people waiting for the bus may like to know where the bus is located.

The drawback of the prior art location methods is that only the owner of the number can locate an object related to the said number. Others cannot locate the object at all or they cannot easily determine which number is mapped to which object. The object can be e.g. a bus.

### Summary of the invention

The invention is based on a name server which receives object data and location data. The location data is from some positioning system. The object data is from persons who allow positioning of themselves, or who allow positioning of some object related to a certain terminal identifier which is usually a phone number. The term "object" may mean a person, a bus, or any other object.

Each piece of the location data includes a terminal identifier and a current location of the object. Each piece of the object data includes a terminal identifier and an object identifier. A terminal identifier may be e.g. an MSISDN number and an object identifier is some hierarchical name, such as a URL address.

The name server maps an object identifier to a terminal identifier. This operation is termed "mapping". After mapping, an object related to the terminal identifier can be located through the name server by referring to the object identifier of the object. For example, when the name server maps a URL address to an MSISDN phone number, the mobile phone having the MSISDN number can be located by referring to its URL address.

"Referring" is an operation which is directed to an object identifier and which results in the location of an object. The referring may be performed, for example, via the Internet by using a browser. The referring may also be performed by sending an SMS or MMS. In future some other techniques might also be usable.

The invention has the following objectives.

The first objective is that the owner of a terminal identifier can decide whether the positioning of the object related to the terminal identifier is possible or not, and who or what are able to locate the object.

The second objective is to provide object data and location data without revealing the terminal identifier/phone number or some other information related to the object.

The third objective is to help the remembering and finding of an object identifier which is related to a certain object.

The fourth objective is to make it possible to locate simultaneously several objects belonging to the same group.

The fifth objective is to make possible that in different time the same object identifier can be related to different objects.

The objectives are achieved by means which are described in the independent patent claims.

### Brief description of the drawings

The invention is described more closely with reference to the accompanying drawings, in which
- Figure 1: pictures the name server and its inputs and outputs.
- Figure 2: shows an example of mappings between object identifiers and phone numbers.
- Figure 3: pictures the name server and its operation environment.

### Detailed description of the invention

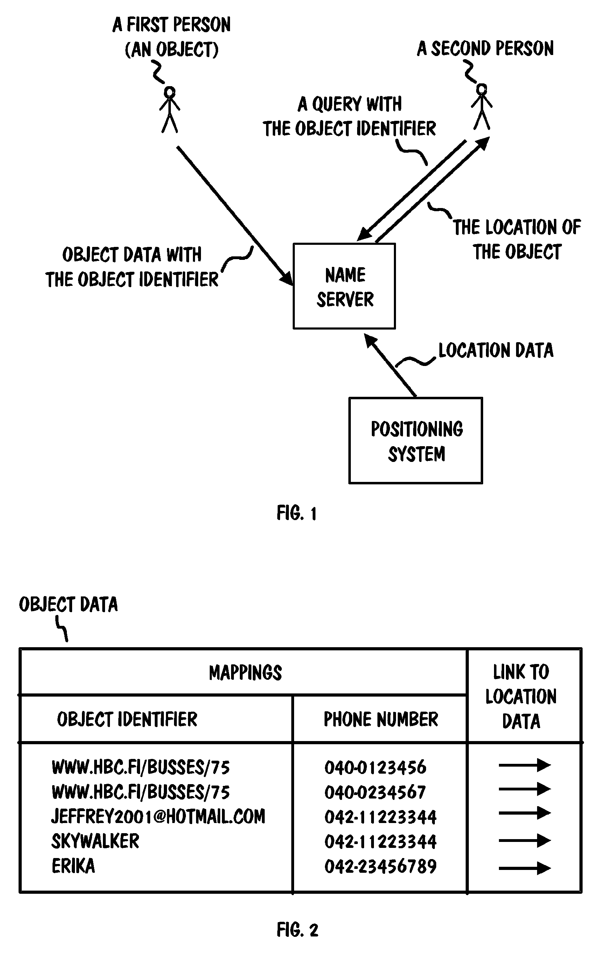

FIG. 1 pictures the name server and its inputs and outputs. The name server receives the object data and the location data. The object data is from a person who allows the positioning of some object, such as the person himself/herself. The location data is from a position system, the location data may be received through a gateway mobile location centre (GMLC). The positioning system may also be GPS-based. In future some other techniques might also be usable. The position of the object is provided for an entity. If required, the entity is authorized by the name server. The entity can be, e.g. a person or a service. The name server receives queries from persons or services. Each query concerns the location of a terminal identifier, i.e. the object related to the terminal identifier. A query includes an object identifier for referring. The name server outputs an object's location as a response to the query.

Next are shortly described how the objectives of the invention are achieved.

Thus, the first objective of the invention is that the owner of a terminal identifier can decide whether the positioning of the object is possible or not, and who or what are able to locate the object.

For example, when a mobile phone owned by to a bus company is placed in a bus, people can locate the bus through the name server. When a mobile phone is owned by a person and the person has told his/her object identifier to his/her friends, the friends can locate the person through the name server.

The second objective is to provide object data and location data without revealing the terminal identifier related to the object.

Persons or services obtain location data by referring the object identifier, i.e. they do not need to the terminal identifier to obtain the location data. The name server outputs the location of the object referred.

The third objective is to help the remembering and finding of an object identifier which is related to the said object.

People can usually remember a lot of names and acronyms but only a few phone numbers. Object identifiers are kinds of names, i.e. they are quite easy to remember. They also are hierarchical which makes them easy to use and administrate. For example, URL address "75@hbc.fi" could be an object identifier.

The fourth objective is to make it possible to locate simultaneously several objects belonging to the same group.

This is possible because several terminal identifiers can be mapped to one object identifier. For example, URL address "75@hbl.fi" could relate to Hovi's bus company. In more detail, the said URL address is intended for the busses serving on a bus line 75, i.e. busses "75" compose a group. There should be some means for finding the nearest bus 75 from the group of busses 75 and, generally, there should be some means for picking out items of some group.

The name server includes at least 1) means for mapping object identifiers to terminal identifiers and 2) means for referring the object identifiers. As mentioned above, referring is the operation resulting in the location of the terminal identifier which is mapped to a certain object identifier.

A terminal identifier can be an MSISDN number but it may also be a fixed telephone number. The terminal identifier identifies a terminal which might or might not be a telephone set. An object identifier can be a domain name, a URL address, or any hierarchical name. A domain name usually relates to an immobile host machine. However, it is possible that a domain name is related to some kind of mobile object. Of course, the location of a mobile object is usually of more interested than the location of an immobile object.

FIG. 2 shows an example of mappings between object identifiers and phone numbers. Thus, in this example the phone numbers are terminal identifiers. There are two phone numbers for busses "75" and two object identifiers for phone number 042-11223344. Object identifier "Erika" represent the most common case, i.e. the said object identifier is mapped to only one phone number. In figure 2 each mapping record includes a link to a piece of location data. The piece of location data discloses by some probability the current location of an object.

The referring can be implemented in several ways. Depending on the implementation of the referring, an object identifier is or is not referable via the Internet, and depending on the implementation of the referring, an object identifier is or is not referable by using SMS or MMS. As mentioned above, an object identifier is any kind of unique identifier identifying a terminal.

If object identifiers are referable via the Internet, by using Internet protocols, the object identifiers must be domain names, URL addresses, or some other Internet identifiers. If object identifiers are referable by using SMS or MMS, the object identifiers do not need to be Internet identifiers.

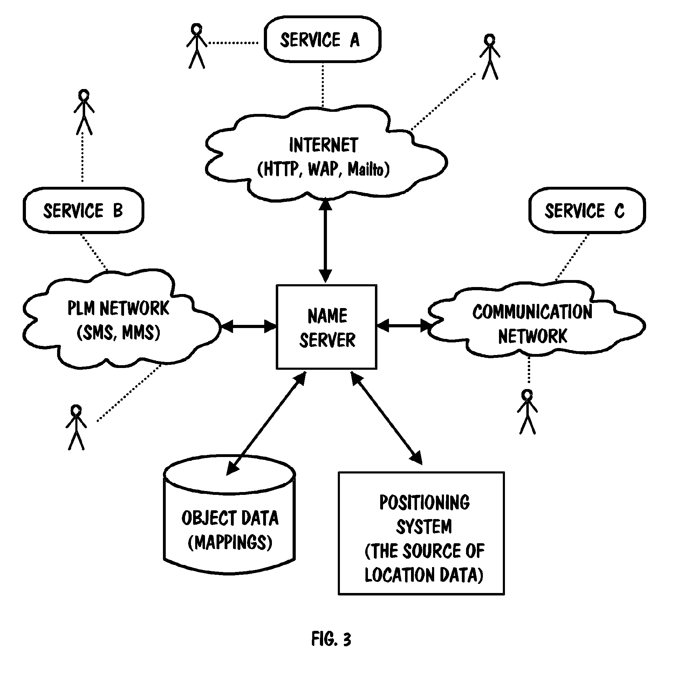

FIG. 3 pictures the name server and its operation environment. In this example, the name server can communicate via a PLM network, via the Internet, and via a communication network which could be e.g. a fixed network. There are services A, B, and C through which persons and services can communicate with the name server. In figure 3 also the name server includes some services, thus persons can communicate directly with the name server. Service C represents a special case in which an automatic service communicates with the name server. In the patent claims a term "entity" may mean a person or a service. The entities query the locations of objects. The name server communicates with the positioning system providing location data related to the objects. The name server queries the location data when needed or between a certain interval.

The object identifiers used in the mappings are hierarchical names, such as "www.hbc.fi/busses/75" or "jeffrey2001@hotmail.com". A delimiter or delimiters, which separate the hierarchical levels of object identifiers, may differ from the delimiters used in the Internet. For example, in an object identifier "hbc∼busses∼75" tildes separate the three hierarchical levels of the object identifier. Delimiters are not needed if there is only one hierarchical level. For example, "skywalker" could be an adequate object identifier in some service using the name server. Hierarchical names having one hierarchical level might be by default object identifiers or persons.

The name server maps an object identifier to at least one terminal identifier. These mappings are included in the object data. The object data is maintained through the name server. The maintaining concerns at least the adding and removing of mappings. The maintaining may also concern the updating of the object data.

The object data can be requested, for example, a person may want to know which mappings he/she has at the moment.

The maintaining and requesting of the object data should in some way be authorized and secured.

When the communication between the name server and an entity is performed via a communication network, A-number identity can used as a security mechanism. When the communication is performed via the Internet, for example, a user identifier and secret key based mechanism can be used as the security mechanisms. The authorization can be performed once when login the name server, or separately for each object identifier stored in the name server. In addition, only some authorized persons are allowed to add or maintain certain hierarchical names which include a certain part. For example, if a hierarchical name includes a part "hbc∼", only the authorized persons of Hovi's bus company are allowed to add or maintain the said hierarchical name.

Depending on the implementation of the name server, the object data can be maintained and requested by using Internet protocols, such as HTTP, FTP, Mailto, or WAP. Alternatively, the object data can be maintained and requested by using SMS or MMS.

The name server has a first interface which is intended for the owners of the terminal identifier to maintain and request their object data. The name server has a second interface which is intended for entities, such as people and services, to query the location data. The entities can refer through the second interface the object identifiers and thus obtain location data.

The following example of an SMS-based use case illustrates both the interfaces. At first, a person types the text: "add Skywalker" and sends the text as a short message to a certain service number of the name server. The name server may check whether object identifier "Skywalker" is already stored in a database. If not, the name server adds it and a terminal identifier among the mappings. The name server obtains the terminal identifier from the short message sent. Then the person tells his friends that his location information is available. After that, the friends can send a short message with the text: "where Skywalker" to the name server. The name server finds a mapping having object identifier "Skywalker" and returns his location.

Each piece of object data includes at least an object identifier which is somehow mapped to a terminal identifier and, of course, the location of the terminal identifier.

If required, each piece of object data may further include a status field indicating an object identifier can be mapped to just one terminal identifier, i.e. that the composing of object group is forbidden.

If required, each piece of object data may further include at least one text field. For example, the text field sent by Skywalker may include the text "fishing". When Skywalker's friends refer object identifier "Skywalker" they obtain Skywalker's location and information "fishing".

The interfaces of the name server may also be Internet-based. The object identifiers can be organized as a menu system so that the menu system can be utilized, for example, through a WAP phone. The object identifiers can be also hyper links. Therefore, the usage of the name server could be browsing, just like in the Internet.

Some object identifiers are intended for public use, for example, the object identifiers related to busses "75" are such ones. In that case, it is important that people are able to find the object identifiers as easy as possible, for example, through the search robots of the Internet.

Conversely, some object identifiers are private, for example, the above-mentioned object identifier "Skywalker" could be intended only for Jeffrey's friends. The name server can be implemented so that it is possible to define an access list which comprises the persons who are allowed to obtain the location information of a certain object. For example, the access list may consist of the phone numbers from which the location of the object can be queried and obtained. In that case, the name server can use A-number identity when performing the authorization.

The mapping may include a second status field indicating whether an object identifier is private or not. The default value could be "private" meaning that the said object identifier cannot be found through the search robots or through the name server. Otherwise, the object identifier is public and it can be searched through the name server and, for example, via the Internet.

It is possible to organize the object data and the location data in several ways. Of course, there are also many other ways to organize the said data than described above.

## Claims

1. A method for locating objects when each object is related to a certain terminal identifier,
**characterized by** the steps of:
receiving a piece of object data from a first entity, wherein said piece includes an object identifier identifying an object to be located,
mapping the object identifier to at least one terminal identifier related to the object,
receiving location data with the terminal identifier related to the object.
storing at least the object identifier and the terminal identifier which are mapped,
referring to the object identifier stored, wherein said referring is initiated by a second entity and results in the location of the object.

2. The method as defined in claim 1,
**characterized by** the further steps of:
sending the location of the object to the second entity.

3. The method as defined in claim 1,
**characterized in that** the object is a person.

4. The method as defined in claim 1,
**characterized in that** the number is a mobile subscriber integrated services digital network number (MSISDN).

5. The method as defined in claim 1,
**characterized in that** the object identifier is a uniform resource locator address (URL address).

6. The method as defined in claim 1,
**characterized in that** the object identifier is a domain name.

7. The method as defined in claim 1,
**characterized by** the further steps of:
communicating with entities.

8. The method as defined in claim 7,
**characterized in that** the communication is performed via a public land mobile network.

9. The method as defined in claim 7,
**characterized in that** the communication is performed via the Internet.

10. The method as defined in claim 7,
**characterized in that** an entity must pass a security mechanism when communicating with the method.

11. The method as defined in claim 10,
**characterized by** the further steps of:
the security mechanism is based on identifying A-number identity.

12. The method as defined in claim 10,
**characterized by** the further steps of:
the security mechanism is based on usage of a user identifier and secret key.

13. The method as defined in claim 10,
**characterized by** the further steps of:
the security mechanism is based on usage of an access list.

14. The method as defined in claim 1,
**characterized by** the further steps of:
maintaining a piece of the object data as response to a maintaining action initiated by the first entity, wherein said piece includes at least the object identifier and the terminal identifier which are mapped.

15. The method as defined in claim 1,
**characterized by** the further steps of:
requesting a piece of the object data as response to a request action initiated by the first entity.

16. The name server as defined in claim 1,
**characterized in that** the object identifier is mapped to one terminal identifier.

17. The method as defined in claim 1,
**characterized in that** the object identifier is mapped to several terminal identifiers.

18. The method as defined in claim 1,
**characterized in that** the terminal identifier is mapped to several object identifiers.

19. The method as defined in claim 1,
**characterized in that** the object identifier is a hierarchical name composed of at least one hierarchical level.

20. The method as defined in claim 18,
**characterized in that** hierarchical levels of the hierarchical name are separated by delimiters.

21. The method as defined in claim 1 and 7,
**characterized in that** when the object identifier is public,
enabling searching of the object identifier.

22. A method as defined in claim 1,
**characterized in that** when the object identifier is mapped to several terminal identifiers relating to objects, and said objects composing a group,
referring to the object identifier results in the locations of said objects.

23. A name server for locating objects when each object is related to a certain terminal identifier,
**characterized in that** the name server includes:
means for receiving a piece of object data from a first entity, wherein said piece includes an object identifier identifying an object to be located,
means for mapping the object identifier to at least one terminal identifier related to the object,
means for receiving location data with the terminal identifier related to the object.
means for storing at least the object identifier and the terminal identifier which are mapped,
means for referring to the object identifier stored, wherein said referring is initiated by a second entity and results in the location of the object.

24. The name server as defined in claim 23,
**characterized in that** the name server further includes:
means for sending the location of the object to the second entity.

25. The name server as defined in claim 23,
**characterized in that** the object is a person.

26. The name server as defined in claim 23,
**characterized in that** the number is a mobile subscriber integrated services digital network number (MSISDN).

27. The name server as defined in claim 23,
**characterized in that** the object identifier is a uniform resource locator address (URL address).

28. The name server as defined in claim 23,
**characterized in that** the object identifier is a domain name.

29. The name server as defined in claim 23,
**characterized in that** the name server further includes:
means for communicating with entities.

30. The name server as defined in claim 29,
**characterized in that** the communication is performed via a public land mobile network.

31. The name server as defined in claim 29,
**characterized in that** the communication is performed via the Internet.

32. The name server as defined in claim 29,
**characterized in that** the name server further includes:
means for communicating with an entity so that the entity must pass a security mechanism.

33. The name server as defined in claim 29,
**characterized in** the name server further includes:
means for maintaining a piece of the object data as response to a maintaining action initiated by the first entity, wherein said piece includes at least the object identifier and the terminal identifier which are mapped.

34. The name server as defined in claim 29,
**characterized in that** the name server further includes:
means for requesting a piece of the object data as response to a request action initiated by the first entity.

35. the name server as defined in claim 23,
**characterized in that** when the object identifier is mapped to several terminal identifiers relating to objects, and said objects composing a group,
referring to the object identifier results in the locations of said objects.
